# EUROPÄISCHE PATENTSCHRIFT

(11) **EP 3 382 211 B1**
(45) Veröffentlichungstag und Bekanntmachung des Hinweises auf die Patenterteilung: **28.07.2021**
(21) Anmeldenummer: 18161881.0
(22) Anmeldetag: 15.03.2018
(51) Int. Cl.: F15B 13/044, F16K 31/52, F16K 31/06, F16K 31/10, F16K 11/16, F16K 11/18

(54) **PNEUMATISCH BETRIEBENES FELDGERÄT MIT EINER PNEUMATIKVENTILANORDNUNG**
PNEUMATIC OPERATED FIELD DEVICE WITH PNEUMATIC VALVE ARRANGEMENT
APPAREIL DE TERRAIN OPÉRÉ PNEUMATIQUEMENT AVEC DISPOSITIF DE SOUPAPE PNEUMATIQUE

(30) Priorität: 30.03.2017 DE 102017106859
(43) Veröffentlichungstag der Anmeldung: 03.10.2018
(73) Patentinhaber: Samson Aktiengesellschaft, 60314 Frankfurt am Main (DE)
(72) Erfinder: KOLBENSCHLAG, Stefan, 64291 Darmstadt (DE)
(74) Vertreter: Schmid, Nils T.F.

(56) Entgegenhaltungen:
- EP-A2- 0 875 701
- EP-A2- 2 336 618
- DE-A1- 3 342 951
- DE-C1- 3 241 916
- DE-U1-202009 000 593
- US-A- 5 687 765
- US-B1- 6 382 585

## Beschreibung

Die Erfindung betrifft ein pneumatisch betriebenes Feldgerät, insbesondere Stellgerät, für eine prozesstechnische Anlage, wie eine chemische Anlage, eine lebensmittelverarbeitende Anlage, eine Kraftwerksanlage oder dergleiche.

Pneumatikventilanordnungen umfassen einen Luftversorgungskanal zum Empfangen von Druckluft von einer Druckluftversorgungsquelle, einen Steuerluftkanal zum Be- und Entlüften eines pneumatischen Aktors, wie eines pneumatischen Stellantriebs, beispielsweise eines pneumatischen Hub-Stellantriebs mit Federrückstellung oder eines doppelt pneumatisch wirkenden Stellantriebs, des Feldgeräts, sowie einen Entlüftungskanal zum Abgeben von Druckluft an eine Drucksenke, wie die Atmosphäre. Bei bekannten Pneumatikventilanordnungen wird die fluidische Verbindung zwischen den drei Luftkanälen, also dem Luftversorgungskanal, dem Steuerluftkanal und dem Entlüftungskanal, durch wenigstens ein Luftsteuerventil gesteuert, sodass Druckluft gesteuert von der Druckluftquelle dem pneumatischen Aktor des Feldgeräts zugeführt oder an die Drucksenke abgeführt werden kann.

Eine Pneumatikventilanordnung, die sich seit Jahren großer Beliebtheit erfreut, ist beispielsweise von DE 195 05 233 A1 bekannt. Die bekannte Pneumatikventilanordnung umfasst ein Gehäuse. In dessen Inneren ist eine Fluidkammer gebildet, in die ein Fluideinlasskanal mündet und aus der zwei Fluidauslasskanäle hinausgeführt sind, von denen einer zu einer Drucksenke und der andere zu einem pneumatischen Aktor eines pneumatischen Feldgeräts führt. In der Pneumatikventilanordnung ist ein Elektromagnet vorgesehen, der einen federvorgespannten Klappanker betätigt, um den Klappanker zwischen einer die Mündungsöffnung des Fluideinlasskanals schließenden und einer die Mündungsöffnung des zu der Drucksenke führenden Fluidauslasskanals schließenden Stellung bewegt.

Andere Ventile, bei ein Klappanker entweder einen Fluideinlasskanal oder einen Fluidauslasskanal schließen kann, sind auch bekannt aus EP 2 336 618 A2, DE 32 41 916 C1, EP 0 875 701 A2 und DE 20 2009 000593 U1. DE 3342951 A1 betrifft eine Betätigungsvorrichtung für zwei abhängig voneinander betätigbare Ventile eines mit einem Antiblockiersystem ausgerüsteten Fahrzeuges. US 5,687,756 offenbart ein 3/3-Magnet-Wegeventil für ein Kraftfahrzeug. US 6,382,585 B1 offenbart Steuerventilsystem.

Von DE 10 2007 062 207 A1 ist eine weitere beliebte Pneumatikventilanordnung bekannt. Diese Pneumatikventilanordnung kann als pneumatischer Verstärker zum Stellen einer Stellarmatur einer verfahrenstechnischen Anlage ausgestaltet sein. Die Pneumatikventilanordnung umfasst eine Verbindungsleitung, um ein verstärktes pneumatisches Ausgangssignal an eine Stellarmatur bzw. einen pneumatischen Aktor abzugeben. Die Verbindungsleitung ist zwischen einem Zuluftventil und einem Abluftventil vorgesehen. Durch das Zuluftventil kann der Verbindungsleitung ein mittels einer Versorgungspneumatik verstärktes Vorsteuersignal für einen pneumatischen Stellantrieb vorgeben werden. Durch das Abluftventil kann die Verbindungsleitung auf Atmosphärendruck gesetzt werden. Das Zu- und das Abluftventil verfügen über je einen pneumatisch gesteuerten Stößel, die mit einem pneumatischen Vorsteuersignal betätigt werden. Zur Erzeugung des pneumatischen Vorsteuersignals wird stromaufwärts des Zuluftventils über eine Drossel Druckluft von der Versorgungspneumatik abgegriffen und durch Einstellen einer Abluftsteuerprallplatte das pneumatische Vorsteuersignal für das Zuluftventil und das Abluftventil eingestellt.

Von Seiten der Anwender ist der Wunsch nach sowohl elektrisch als auch pneumatisch besonders energiesparenden Pneumatikventilanordnungen laut geworden.

Es ist eine Aufgabe der Erfindung, die Nachteile des Stands der Technik zu überwinden und insbesondere ein besonders energiesparendes pneumatisch betriebenes Feldgerät mit einer Pneumatikventilanordnung bereitzustellen, die nichtsdestotrotz hohen Anforderungen an Stellgenauigkeit und Sicherheit entspricht.

Diese Aufgabe wird gelöst durch den Gegenstand von Anspruch 1.

Demnach ist ein pneumatisch betriebenes Feldgerät für eine prozesstechnische Anlage, wie eine chemische Anlage, eine lebensmittelverarbeitende Anlage, eine Kraftwerksanlage, umfassend eine Pneumatikventilanordnung vorgesehen. Die erfindungsgemäße Pneumatikventilanordnung kann vorzugsweise als elektropneumatische Ventilanordnung ausgestaltet sein. Die Pneumatikventil-anordnung umfasst einen Luftversorgungskanal zum Empfangen von Druckluft von einer Luftversorgungsquelle, wie einem Kompressor, einem Drucklufttank, einer Druckluftversorgungsleitung oder dergleichen. Des Weiteren umfasst die Pneumatikventilanordnung einen Steuerluftkanal zum Be- und Entlüften eines pneumatischen Aktors des Feldgeräts, wie einen pneumatischen Stellantrieb, insbesondere einen einfach wirkenden pneumatischen Hubantriebs mit Federrückstellung oder einen pneumatisch doppelt wirkenden Stellantrieb. Ferner umfasst die Pneumatikventilanordnung einen Entlüftungskanal zum Abgeben von Druclduft an eine Drucksenke, wie die Atmosphäre. Vorzugsweise weist die Pneumatikventilanordnung eine Luftkammer auf, in die drei Luftkanäle, nämlich der Luftversorgungskanal, der Steuerluftkanal und der Entlüftungskanal, münden. Vorzugsweise sind der Luftversorgungskanal, der Steuerluftkanal und/oder der Entlüftungskanal zumindest paarweise, miteinander fluidisch verbindbar. Die erfindungsgemäße Pneumatikventilanordnung weist ein Entlüftungsventil zum Öffnen und/oder Schließen des Entlüftungskanals sowie ein Belüftungsventil zum Öffnen und/oder Schließen des Versorgungskanals auf. Das Entlüftungsventil und/oder das Belüftungsventil ist vorzugsweise als Sitzventil ausgestaltet. Vorzugsweise können zwei der Luftkanäle je ein Sitzventil zum Be- und/oder Entlüften der Luftkammer aufweisen.

Erfindungsgemäß umfasst die Pneumatikventilanordnung einen schwenkbaren Mitnehmerhebel zum gemeinsamen Betätigen des Belüftungsventils und des Entlüftungsventils, der das Entlüftungsventil in dessen Schließstellung hält, während er das Belüftungsventil aus dessen Schließstellung öffnet. Der schwenkbare Mitnehmerhebel ist also dazu ausgestaltet, vorzugsweise ausschließlich in einem Entlüftungsventil-Schließzustand, in dem das Entlüftungsventil sich in dessen Schließstellung befindet, einen Belüftungsventil-Öffnungszustand zuzulassen bzw. zu bewirken, in dem das Belüftungsventil eine Öffnungsstellung einnimmt, in der der Belüftungskanal geöffnet ist. Bei eventuell als Sitzventilen ausgestaltetem Belüftungs- und Entlüftungsventil kann der schwenkbare Mitnehmerhebel zum gemeinsamen Betätigen der beiden Sitzventile ausgestaltet sein.

Die Pneumatikventilanordnung kann derart realisiert sein, dass die Luftkammer mit Ausnahme ihrer Luftkanäle luftdicht abgeschlossen ist, insbesondere gegenüber der Druckluftversorgungsquelle und/oder Drucksenke, vorzugsweise für Druckdifferenzen zwischen dem Druck der Druckluftversorgungsquelle und dem der Drucksenke, insbesondere der Atmosphäre, bis zu 6 bar, bis zu 10 bar oder sogar bis zu 15 bar. Indem der schwenkbare Mitnehmerhebel das Entlüftungsventil zum Öffnen des Belüftungsventils geschlossen hält, kann gewährleistet werden, dass während eines Einströmvorgangs von Druckluft von der Versorgungsquelle ein Ablassen von Druckluft zu der Drucksenke ausgeschlossen ist. Somit wird das Ablassen ungenutzter Druckluft verhindert oder anders gesagt kann sämtliche der Pneumatikventilanordnung bereitgestellte Druckluft zum Betätigen des pneumatischen Aktors des Feldgeräts genutzt werden. Auf diese Weise lässt sich ein sehr hoher Wirkungsgrad bzw. sehr niedriger Energieverbrauch erreichen. Die erfindungsgemäße Pneumatikventilanordnung kann als 3/3-Wegeventil bezeichnet sein.

Während das Entlüftungsventil geschlossen ist, kann das Belüftungsventil eine Schließstellung einnehmen oder sich ausgehend von der Schließstellung öffnen, wobei ein Öffnungsquerschnitt des Belüftungsventils vorzugsweise stufenlos einstellbar sein kann. Das Belüftungsventil kann unterschiedliche offene Stellungen einnehmen, um eine Drosselwirkung bereitzustellen, sodass ein gewünschter Volumenstrom von der Druckluftversorgungsquelle zu dem Steuerluftkanal vorzugsweise konstant einstellbar ist. Auf diese Weise kann ein proportionales Verhalten zwischen einer Steuerungsbetätigungsgröße, beispielsweise einem Magnetspulen-Steuerungsstrom eines elektromagnetischen Aktors, und dem Volumenstrom durch den Steuerluftkanal zum Betätigen des pneumatischen Aktors erreicht werden.

Gemäß der Erfindung sind das Belüftungsventil und das Entlüftungsventil durch den Mitnehmerhebel gekoppelt, der sich für eine rotatorische Betätigungsbewegung zum Öffnen des Belüftungsventils an dem Entlüftungsventil an dessen Schließstellung abstützt. Vorzugsweise kann sich der Mitnehmerhebel von dem Belüftungsventil zu dem Entlüftungsventil innerhalb einer Luftkammer erstrecken, in welche die Luftkanäle münden. Die Verwendung eines solchen Mitnehmerhebels gestattet es, das Gehäuse der Pneumatikventilanordnung leckagefrei zu gestalten. Insbesondere kann das Gehäuse der Pneumatikventilanordnung frei von einer speziellen Öffnung für den Mitnehmerhebel, insbesondere frei von einer zusätzlichen Öffnung nur für die Betätigungskinematik des Belüftungs- und des Entlüftungsventils gebildet sein.

Gemäß der Erfindung ist der Mitnehmerhebel derart an einem ortsfesten Teil eines Gehäuses der Pneumatikventilanordnung, an dem Belüftungsventil und/oder an dem Entlüftungsventil gelagert, dass der Mitnehmerhebel sich für die rotatorische Betätigungsbewegung zum Öffnen des Belüftungsventils um eine erste Schwenkachse dreht. Zusätzlich ist der Mitnehmerhebel derart an einem ortsfesten Teil des Gehäuses, an dem Belüftungsventil und/oder an dem Entlüftungsventil, gelagert, dass der Mitnehmerhebel sich für eine rotatorische Betätigungsbewegung zum Schließen des Entlüftungsventils um eine zweite Schwenkachse dreht. Vorzugsweise unterscheidet sich die zweite Schwenkachse von der ersten Schwenkachse. Der Mitnehmerhebel kann auch als Wipphebel bezeichnet sein. Die bevorzugte Lagerung des Mitnehmerhebels, die eine Drehbewegung des Mitnehmerhebels wahlweise um eine erste Schwenkachse oder eine zweite Schwenkachse zulässt, erlaubt eine besonders platzsparende Unterbringung des Mitnehmerhebels, insbesondere an der Betätigungskinematik, innerhalb des Gehäuses der Pneumatikventilanordnung.

Gemäß einer ersten bevorzugten Ausführung einer solchen Pneumatikventilanordnung stützt sich der Mitnehmerhebel für die rotatorische Betätigungsbewegung zum Öffnen des Entlüftungsventils an dem Belüftungsventil in dessen Schließstellung ab. Gemäß einer zweiten bevorzugten Ausführung einer solchen Pneumatikventilanordnung stützt sich der Mitnehmerhebel für die rotatorische Betätigungsbewegung zum Öffnen des Entlfüftungsventils an einem gehäusefesten Pendellager, wie einer Klinge, ab.

Gemäß einer bevorzugten Weiterbildung der Erfindung spannt ein Zwangsmittel, wie eine Feder, den Mitnehmerhebel für die rotatorische Betätigungsbewegung zum Schließen des Entlüftungsventils gegen ein Widerlager vor, um den Mitnehmerhebel relativ zur zweiten Schwenkachse, insbesondere um das Widerlager, drehbar zu sichern.

Gemäß einer bevorzugten Weiterbildung der Erfindung löst die rotatorische Betätigungsbewegung zum Öffnen des Belüftungsventils um die erste Schwenkachse die der zweiten Schwenkachse zugeordnete Sicherung. Alternativ oder zusätzlich kann die rotatorische Betätigungsbewegung zum Schließen des Entlüftungsventils um die zweite Schwenkachse eine der ersten Schwenkachse zugeordnete Sicherung lösen.

Gemäß einer bevorzugten Weiterbildung der Erfindung, die mit den vorherigen kombinierbar ist, ist die effektive Hebellänge zwischen der jeweiligen Schwenkachse und einer Krafteinleitungsstelle des Mitnehmerhebels für die beiden Betätigungsbewegungen gleich oder unterschiedlich. Vorzugsweise ist die effektive Hebellänge von einer Krafteinleitungsstelle, in die die Kraft von einem Aktor zum Betätigen der Pneumatikventilanordnung einleitbar ist, zu der ersten Schwenkachse kleiner als die effektive Hebellänge von der Krafteinleitungsstelle zu der zweiten Schwenkachse. Auf diese Weise kann sichergestellt sein, dass zum Schließen des Entlüftungsventils eine größere Schließkraft bereitgestellt wird als die Öffnungskraft zum Öffnen des Belüftungsventils. So kann eine sichere Schließwirkung erreicht werden.

Gemäß einer bevorzugten Ausführung der Erfindung, die mit den vorherigen kombinierbar ist, umfasst die Pneumatikventilanordnung ferner einen Aktor, wie ein elektrischer Aktor, ein pneumatischer Aktor, ein hydraulischer Aktor oder dergleichen, zum Betätigen der Pneumatikventilanordnung. Dabei wird der Mitnehmerhebel für die beiden Betätigungsbewegungen durch denselben Aktor betätigt. Die Pneumatikventilanordnung kann also derart ausgestaltet sein, dass derselbe Aktor die Betätigungsbewegung zum Schließen des Entlüftungsventils als auch die Betätigungsbewegung zum Öffnen des Belüftungsventils bewirkt. Vorzugsweise kann die Krafteinleitung des Aktors zum Bewegen des Mitnehmerhebels für die rotatorische Betätigungsbewegung zum Öffnen des Belüftungsventils auf das Entlüftungsventil schließkraftverstärkend wirken. Auf diese Weise kann bei geöffnetem Belüftungsventil eine Leckage durch das geschlossene Entlüftungsventil vermieden werden.

Gemäß einer bevorzugten Weiterbildung der Erfindung definiert der Aktor eine Krafteinleitungsstelle zum Betätigen des Mitnehmerhebels außerhalb der drei Luftkanäle und/oder einer Luftkammer, in die die drei Luftkanäle münden. Der Aktor kann dann die Krafteinleitungsstelle zum Betätigen des Mitnehmerhebels insbesondere im Bereich der Drucksenke, wie der Atmosphäre, definieren. Vorzugsweise ist der Aktor außen an einem ortsfesten Teil eines Gehäuses der Pneumatikventilanordnung angeordnet. Zum Einführen des Mitnehmerhebels aus dem Drucksenkenbereich in den steuerluftführenden Bereich erstreckt sich der Mitnehmerhebel vorzugsweise durch die ohnehin vorhandene Entlüftungsöffnung bzw. den Entlüftungskanal.

Gemäß einer anderen bevorzugten Ausführung kann zumindest ein Teil des Aktors, insbesondere ein beweglicher Teil des Aktors, vorzugsweise sämtliche bewegliche Teile des Aktors, innerhalb des Gehäuses der Pneumatikventilanordnung, vorzugsweise innerhalb eines gegenüber dem Außenbereich abgedichteten Kompartiment des Gehäuses, angeordnet sein. Bei dieser Ausführung ist es bevorzugt, dass der Aktor eine Krafteinleitungsstelle zum Betätigen des Mitnehmerhebels innerhalb der drei Luftkanäle und/oder innerhalb der Luftkammer, in welche die drei Luftkanäle münden, definiert. Gemäß dieser alternativen Ausgestaltung sind die Aktoren, bzw. zumindest die beweglichen Teile der Aktoren, pneumatisch abgedichtet innerhalb des Gehäuses der Pneumatikventilanordnung eingehaust, sodass dynamische Dichtungen zur Führung beweglicher Teile der Aktoren zwischen einem beispielsweise atmosphärischen Außenbereich und einem druckluftführenden Innenbereich der Pneumatikventilanordnung nicht notwendig sind.

Gemäß einer bevorzugten Ausführung der Erfindung, ist der Mitnehmerhebel mit einem Ventilglied des Belüftungsventils und/oder des Entlüftungsventils starr verbunden. Alternativ oder zusätzlich ist bei einer bevorzugten Ausführung der Erfindung der Mitnehmerhebel an einem Ventilglied des Belüftungsventils und/oder des Entlüftungsventils gelenkig angebunden. Vorzugsweise ist der Mitnehmerhebel mit dem Ventilglied des Entlüftungsventils starr verbunden. Vorzugsweise ist der Mitnehmerhebel an dem Ventilglied des Belüftungssitzventils gelenkig angebunden.

Gemäß einer bevorzugten Ausführung der Erfindung, die mit den zuvor genannten kombinierbar ist, ist der Mitnehmerhebel mit einer Führung relativ zum Gehäuse der Pneumatikventilanordnung schwimmend gelagert. Die Führung weist wenigstens einen Stift oder wenigstens zwei Stifte zum innenseitigen oder außenseitigen Führen des Mitnehmerhebels auf. Die Führung kann auch genau einen oder genau zwei Stifte aufweisen. Alternativ umfasst die Führung wenigstens eine oder zwei Innenseitenwände einer Luftkammer, in die die drei Luftkanäle münden. Gemäß einer bevorzugten Ausführung kann eine Lagerung realisiert sein durch zwei gegenüberliegende Innenseitenwände und einem Stift. Mit einer derartigen Führung kann eine platzsparende sichere Führung des Mitnehmerhebels realisiert sein, welche beispielsweise ein Verkippen des Mitnehmerhebels verhindert.

Gemäß einer bevorzugten Ausführung der Erfindung, die mit den vorherigen kombinierbar ist, weist das Belüftungsventil und/oder das Entlüftungsventil einen Ventilkörper auf, dessen Dichtwirkfläche zumindest teilweise sphärisch geformt ist. Vorzugsweise kann der Ventilkörper des Belüftungsventils und/oder der Ventilkörper des Entlüftungsventils vollständig sphärisch geformt sein. Alternativ oder zusätzlich können gemäß einer bevorzugten Ausführung einer erfindungsgemäßen Pneumatikventilanordnung das Belüftungsventil und/oder das Entlüftungsventil einen Ventilkörper aufweisen, dessen Dichtwirkfläche aus einem gehärteten Stahl oder Keramik gefertigt ist. Vorzugsweise ist der Ventilkörper bzw. sind die Ventilkörper aus einem nicht-magnetischen Material gefertigt. Insbesondere ist der gesamte Ventilkörper aus einem nicht-magnetischen Material, gehärtetem Stahl und/oder Keramik gefertigt.

Gemäß einer bevorzugten Ausführung der Erfindung, die mit den vorherigen kombinierbar ist, ist die Pneumatikventilanordnung dazu ausgestaltet, dass in einem unbetätigten, stromlosen, Zustand eines elektrischen Aktors, das Belüftungsventil geschlossen und das Entlüftungsventil geöffnet ist. So kann eine sichere Notentlüftung gewährleistet sein.

Gemäß einer bevorzugten Ausführung der Erfindung, ist das Belüftungsventil und/oder das Entlüftungsventil mit Druckkraftkompensationsmitteln, wie einem Kompensationskolben, ausgestattet.

Die Erfindung betrifft ein pneumatisch betriebenes Feldgerät, insbesondere ein Stellgerät, das eine erfindungsgemäßen Pneumatikventil-anordnung aufweist, wobei das Feldgerät ferner einen einfach pneumatisch wirkenden Stellantrieb mit Federrückstellung oder einen pneumatisch doppelt wirkenden Stellantrieb, aufweist, der pneumatisch mit dem Steuerluftkanal kommuniziert. Falls das Feldgerät einen pneumatisch doppelt wirkenden Stellantrieb aufweist, das eine erste pneumatische Arbeitskammer und eine zweite pneumatische Arbeitskammer aufweist, die pneumatisch voneinander getrennt sind und gegenläufige Wirkrichtungen haben, kann das Feldgerät zwei Pneumatikventilanordnungen aufweisen, von denen wenigstens eine, vorzugsweise beide, erfindungsgemäß ausgestaltet sind. Die erste Arbeitskammer kann mit dem Steuerluftkanal der ersten Pneumatikventilanordnung verbunden sein und die zweite pneumatische Arbeitskammer mit dem pneumatischen Steuerluftkanal der zweiten Pneumatikventilanordnung. Vorzugsweise weist der pneumatische Stellantrieb wenigstens eine pneumatische Arbeitskammer auf, die zum Druckaufbau und/oder Druckabsenken nur einen pneumatischen Steuereingang aufweist, wobei dieser eine vorzugsweise einzige pneumatische Steuereingang mit dem einen Steuerluftkanal der Pneumatikventilanordnung verbunden ist. Das Feldgerät kann ferner eine pneumatische Druckluftquelle umfassen, wie einen Drucklufttank, einen Kompressor, eine Versorgungsleitung oder dergleichen, die pneumatisch mit dem Luftversorgungskanal verbunden ist.

Weitere Aspekte der Erfindung sind in den Unteransprüchen angegeben. Weitere Vorteile, Merkmale und Aspekte der Erfindung sind durch die folgende Beschreibung bevorzugter Ausführungen der Erfindung anhand der beiliegenden Zeichnungen erläutert, in denen zeigen:
- Fig. 1a: eine schematische Querschnittsansicht einer erfindungsgemäßen Pneumatikventilanordnung gemäß einer ersten Ausführung in einem Belüftungszustand;
- Fig. 1b: die erfindungsgemäße Pneumatikventilanordnung gemäß Fig. 1a in einem druckkonstanten Haltezustand;
- Fig. 1c: die erfindungsgemäße Pneumatikventilanordnung gemäß Fig. 1a in einem Entlüftungszustand;
- Fig. 2a: eine schematische Querschnittsansicht einer nicht zur Erfindung gehörenden Pneumatikventilanordnung gemäß einer zweiten Ausführung in einem Belüftungszustand;
- Fig. 2b: die nicht zur Erfindung gehörende Pneumatikventilanordnung gemäß Fig. 2a in einem druckkonstanten Haltezustand;
- Fig. 2c: die nicht zur Erfindung gehörende Pneumatikventilanordnung gemäß Fig. 2a in einem Entlüftungszustand;
- Fig. 3a: eine schematische Querschnittsansicht einer erfindungsgemäßen Pneumatikventilanordnung gemäß einer dritten Ausführung in einem Belüftungszustand;
- Fig. 3b: die erfindungsgemäße Pneumatikventilanordnung gemäß Fig. 3a in einem druckkonstanten Haltezustand;
- Fig. 3c: die erfindungsgemäße Pneumatikventilanordnung gemäß Fig. 3a in einem Entlüftungszustand;
- Fig. 4a: eine schematische Querschnittsansicht einer erfindungsgemäßen Pneumatikventilanordnung gemäß einer vierten Ausführung in einem Belüftungszustand;
- Fig. 4b: die erfindungsgemäße Pneumatikventilanordnung gemäß Fig. 4a in einem druckkonstanten Haltezustand; und
- Fig. 4c: die erfindungsgemäße Pneumatikventilanordnung gemäß Fig. 4a in einem Entlüftungszustand.

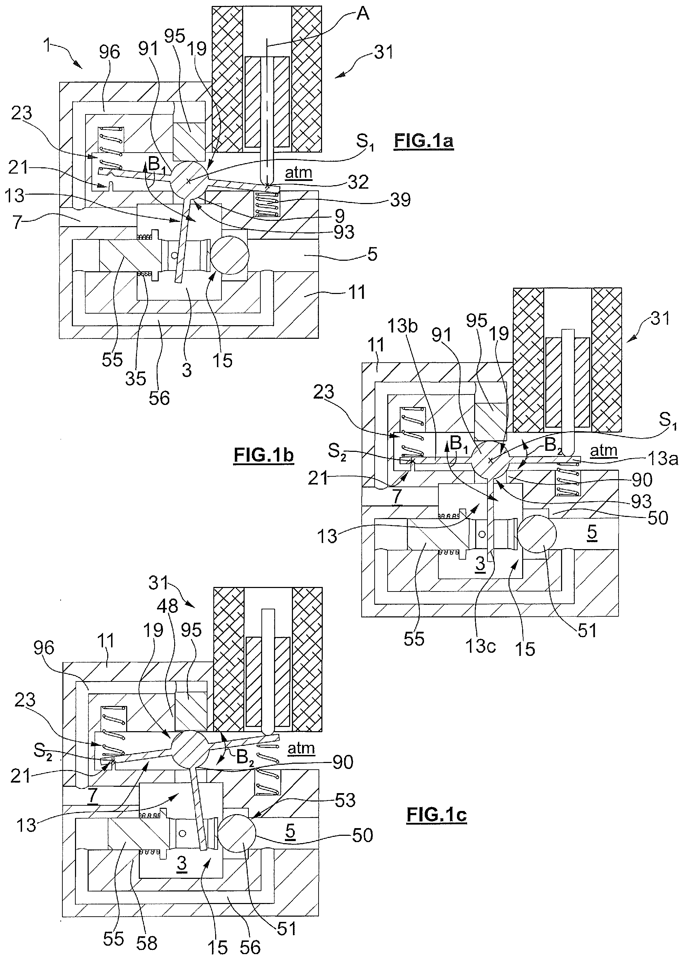

In den folgenden Beschreibungen der in den Figuren 1a bis 4c dargestellten Ausführungen werden für dieselben oder ähnlichen Komponenten dieselben oder ähnlichen Bezugszeichen verwendet.

Die in den Figuren dargestellte erfindungsgemäße Pneumatikventilanordnung ist im Allgemeinen mit der Bezugsziffer 1 versehen. Sie umfasst als Hauptbestandteil drei fluidisch miteinander verbundene Luftkanäle 5, 7, und 9, nämlich einen Luftversorgungskanal 5, einen Steuerluftkanal 7 und einen Entlüftungskanal 9. Der Bereich, in dem die Luftkanäle 5, 7, und 9 miteinander in Verbindung stehen, kann als Luftkammer 3 bezeichnet sein. Weitere Hauptbestandteile der erfindungsgemäßen Pneumatikventilanordnung sind realisiert durch das Belüftungsventil 15 zum Öffnen und/oder Schließen des Belüftungskanals 5 und das Entlüftungsventil 19 zum Öffnen und/oder Schließen des Entlüftungskanals 9 sowie den schwenkbaren Mitnehmerhebel 13, der eine mechanische Kopplung zwischen dem Belüftungsventil 15 und dem Entlüftungsventil 19 realisiert.

Bei den vier dargestellten Ausführungen ist das pneumatische Wirkprinzip stets dasselbe: Das Gehäuse 11 der Pneumatikventilanordnung 1 weist einen Belüftungskanal oder Luftversorgungkanal 5 auf, durch den Druckluft von einer Druckluftversorgungsquelle, die bevorzugt als Kompressor oder Druckluftreservoir ausgestaltet sein kann, strömen kann. Der Belüftungskanal 5 mündet in eine Luftkammer 3. In die Luftkammer 3 mündet auch ein Steuerluftkanal 7 sowie ein Entlüftungskanal 9.

Der Steuerluftkanal 7 ist in dem Gehäuse 11 der Pneumatikventil-anordnung 1 ausgebildet. Der Steuerluftkanal 7 dient zur pneumatischen Anbindung eines pneumatischen Aktors (nicht abgebildet) an die Pneumatikventilanordnung. Ein pneumatischer Aktor kann beispielsweise ein einfach wirkender pneumatischer Hubantrieb mit Federrückstellung sein. Derartige Hubantriebe weisen eine pneumatische Arbeitskammer auf, die mit einem Steuerdruck oder Stelldruck beaufschlagt werden, der eine pneumatische Stellkraft bereitstellt, um eine Stellstange oder Stellwelle des pneumatischen Aktors zu betätigen. An einer Stellstange oder Stellwelle eines pneumatischen Aktors kann beispielsweise ein Stellventil einer prozesstechnischen Anlage angebunden sein. Vorzugsweise kann die Arbeitskammer des pneumatischen Stellantriebs über einen einzigen pneumatischen Ein- und Ausgang verfügen, über den die Arbeitskammer des pneumatischen Aktors belüftet oder entlüftet werden kann. Der Eingang eines pneumatischen Aktors kann mit dem Steuerluftkanal 7 der Pneumatik-ventilanordnung 1 verbunden werden, sodass durch die Pneumatikventilanordnung der pneumatische Aktor über den Steuerluftkanal 7 be- oder entlüftet werden kann. Die erfindungsgemäße Pneumatikventilanordnung dient also vorzugsweise dem Zweck, einen pneumatischen Aktor einen präzise bestimmten Steuerdruck bzw. Stelldruck bereitzustellen. Es ist auch denkbar, dass die Pneumatikventilanordnung 1 einen pneumatischen Aktor, z. B. eine Ventil-Düse oder einen pneumatischen Motor, und einen vorzugsweise konstanten Steuervolumenstrom bereitstellt. Dazu kann das Belüftungsventil 15 mit einer vorbestimmten Drosselung geöffnet werden. Durch den Entlüftungskanal 9 kann eine pneumatische Kommunikationsverbindung zwischen dem Luftkanal 3 und einer Drucksenke, insbesondere der Atmosphäre, bereitgestellt werden.

Im Bereich des Belüftungskanals 5 ist ein Belüftungssitzventil 15 vorgesehen, mit dem der Belüftungskanal 5 geöffnet oder geschlossen werden kann. Im Bereich des Entlüftungskanals 9 ist ein Entlüftungssitzventil 19 vorgesehen, mit dem der Entlüftungskanal 9 geöffnet oder geschlossen werden kann. Wenn das Belüftungsventil 15 geöffnet ist, kann pneumatische Druckluft von der Druckversorgungsquelle (nicht abgebildet) durch den Belüftungskanal 5 in die Luftkammer 3 strömen. Wenn das Entlüftungsventil 9 geöffnet ist, kann Luft mit einem gegenüber dem Atmosphärendruck erhöhten Druck durch den Entlüftungskanal 9 zur Atmosphäre atm entweichen. Der Steuerluftkanal 7 ist vorzugsweise frei von Ventilen ausgestaltet. Der Steuerluftkanal 7 realisiert eine pneumatische Kommunikationsverbindung zwischen dem Luftkanal 3 und dem (nicht abgebildeten) pneumatischen Aktor, sodass in der Luftkammer 3, dem Steuerluftkanal 7 und dem mit dem Steuerluftkanal 7 in fluidischer Verbindung stehenden Teil des pneumatischen Aktors, beispielsweise dessen pneumatischer Arbeitskammer, im Wesentlichen derselbe Druck, nämlich der Steuerdruck oder Stelldruck, vorherrscht. Mit der Pneumatikventilanordnung 1 kann dieser Steuerdruck gezielt auf präzise Druckwerte zwischen dem Versorgungsdruck der Versorgungsdruckluftquelle und dem Druck der Drucksenke, beispielsweise der Atmosphäre, eingestellt werden. Die Pneumatikventilanordnung 1, also insbesondere das Gehäuse 11, ist bevorzugt dazu ausgestaltet, bis zu einer Druckdifferenz zwischen Druckluftversorgungsquelle und Druckluftsenke von wenigstens 6 bar, vorzugsweise wenigstens 10 bar, insbesondere wenigstens 15 bar, im Wesentlichen leckagefrei abdichtend zu wirken.

Bei den in den Figuren 1a bis 4c dargestellten Ausführungen einer Pneumatikventilanordnung 1 sind das Belüftungsventil 15 und das Entlüftungsventil 19 mechanisch mittels eines schwenkbaren Mitnehmerhebels 13 miteinander gekoppelt. Die mechanische Kopplung des Belüftungsventils 15 und des Entlüftungsventils 19 mittels des schwenkbaren Mitnehmerhebels 13 kann vorzugsweise bewirken, dass eine Schaltlogik bzw. kausale Verknüpfung der Betätigungszustände des Belüftungsventils und des Entlüftungsventils besteht. Vorzugsweise wird mit dem erfindungsgemäßen Mitnehmerhebel 13 bewirkt, dass das Entlüftungsventil 19 sich in einem (selbst beliebig geringen) Öffnungszustand des Belüftungsventils 15 stets in einem Schließzustand befindet. Dazu kann der Mitnehmerhebel 13 dazu vorgesehen sein, eine öffnende und/oder schließende Betätigungseinwirkung auf das Belüftungsventil 15 zu verrichten. Erfindungsgemäß ist es dem Mitnehmerhebel 13 nur dann möglich, eine öffnende Betätigungswirkung bezüglich des Belüftungsventils 15 zu verrichten, solange sich das Entlüftungsventil 19 in seiner Schließstellung befindet.

Der Mitnehmerhebel 13 gewährleistet also die zwingende Einhaltung einer pneumatischen Betätigungslogik gemäß welcher kein Zustand auftreten darf, in dem die Luftkammer 3 gleichzeitig über ein geöffnetes Belüftungsventil 15 mit Druckluft aus der Druclduftversorgungsquelle gespeist wird und Druckluft durch ein geöffnetes Entlüftungsventil 19 zur Atmosphäre atm hin entlässt. Der Mitnehmerhebel 13 gestattet es aber durchaus, dass das Belüftungsventil 15 und das Entlüftungsventil 19 gleichzeitig ihre Schließstellung einnehmen können, sodass die Luftkammer 3 pneumatisch getrennt ist sowohl von der Druckluftver-sorgungsquelle als auch von der Atmosphäre atm. Indem es ein mechanischer Körper, nämlich der Mitnehmerhebel 13 ist, welcher bei der erfindungsgemäßen Pneumatik-ventilanordnung 1 die pneumatische Wirkungslogik des Belüftungsventils 15 und des Entlüftungsventils 19 bewirkt, bedarf die logische Kopplung der Zustände des pneumatischen Belüftungsventils 15 und des Entlüftungsventils 19 keiner zusätzlichen elektrischen und/oder pneumatischen Energie.

Im Folgenden wird im Detail auf die Figuren 1a, 1b und 1c in den unterschiedlichen Stellzuständen dargestellte bevorzugte Ausführung einer erfindungsgemäßen Pneumatikventilanordnung 1 eingegangen. Das in den Figuren 1a, 1b und 1c dargestellte Belüftungsventil 15 ist als Belüftungssitzventil realisiert. Das Belüftungssitzventil 15 umfasst ein bewegliches Ventilglied 51, das durch eine Kugel aus einem vorzugsweise nicht-metallischen Material großer Härte, wie Keramik oder gehärtetem vorzugsweise nicht-magnetischen Stahl, besteht. Wie in den Figuren 1b und 1c abgebildet, steht das kugelförmige Ventilglied 51 des Belüftungsventils 15 in einem umfänglichen, ringförmigen Schließkontakt mit dem Ventilsitz 50, der in dem Bereich der Mündung des Belüftungskanals 5 der Luftkammer 3 gebildet ist.

Das Ventilglied 51 ist durch ein mittels einer Rückstellfeder 35 federvorgespannten Kolben 55 in die Schließstellung gedrängt. Der Kolben 55 wirkt außerdem als Kompensationskolben. Zu diesem Zweck wird die abgewandte Seite des Kolbens 55 bei einem Kompensationskanal 56 mit dem in dem Versorgungskanal 5 anliegende Versorgungsdruck von der Versorgungs-druckluftquelle beaufschlagt. In dem in den Figuren 1b und 1c dargestellten Schließzustand des Belüftungsventils 15 wirkt also in Öffnungsrichtung auf die Ventilkugel 51 derselbe Versorgungsdruck, welcher auch in umgekehrter Wirkrichtung auf den Kompensationskolben 55 wirkt, welcher das Ventilglied 51 in seine Schließstellung drückt. Indem die mit dem Versorgungsdruck beaufschlagte Fläche des Kompensationskolben 55 und des Ventilglieds 51 näherungsweise gleich groß bemessen ist, ist die pneumatische Öffnungskraft auf das Ventilglied 51 infolge einer eventuellen Druckdifferenz zwischen den Drucken der Versorgungsdruckluftquelle und der Luft in der Luftkammer 3 kompensiert. Der Durchmesser des Ventilsitzes 15 liegt vorzugsweise zwischen 1 mm und 10 mm, insbesondere zwischen 3 mm und 5 mm. Zur Abdichtung im Bereich zwischen dem Gehäuse 11 und dem Kompensationskolben 55 ist vorzugsweise als dynamische Abdichtung 58 eine Membran vorgesehen, damit keine Druckluft entlang des Kompensationskolbens 55 von der Druckluftversorgungsquelle in die Luftkammer 3 strömen kann. Membrane haben außerdem den Vorteil einer sehr geringen Reibung. Ein druckentlastetes Belüftungsventil 15 kann, wie in den Figuren 1a bis 1c dargestellt, ausschließlich durch die Schließwirkung der Rückstellfeder 35 in der Schließstellung gehalten werden. Die Anpresskraft auf den Ventilsitz 5 ist nur von der Rückstellfeder 35 abhängig, welche infolge der Druckentlastung sehr gering dimensioniert sein kann.

Das Entlüftungsventil 19 kann mit einem Druckentlastungskolben oder Kompensationskolben 95 ausgestattet sein. Der Kompensationskolben 95 des Entlüftungsventils 9 ist gegenüber dem Ventilsitz 90 angeordnet. Die pneumatische Wirkfläche des Kompensationskolbens 95 und des Ventilglieds 91 des Entlüftungsventils 19 sind nahezu gleich groß, sodass der Druckgradient zwischen der Luftkammer 3 und der Drucksenke bzw. Atmosphäre atm vorzugsweise vollständig kompensiert ist. In dem Ventilgehäuse 11 ist ein Kompensationskanal 96 vorgesehen, der die Luftkammer 3 bzw. den Steuerluftkanal 7 pneumatisch mit dem gegenüber dem Ventilsitz 90 angeordneten Kompensationskolben 95 in pneumatischer Wirkverbindung steht.

Die auf das Ventilglied 91 des Entlüftungsventils 19 wirkende Schließ-(oder Öffnungs-)Kraft resultiert aus der Betätigungskraft durch einen Aktor 31, der entgegen dem Aktor wirkenden Federkraft der Rückstellfeder 35 sowie dem gegebenenfalls einer von der Feder 23 ausgehenden Kraft.

Figur 1c zeigt die Pneumatikventilanordnung 1 mit geöffnetem Entlüftungsventil 19. Das Ventilglied 91 ist gemäß den Figuren 1a bis 1c einstückig mit einem T-förmigen Mitnehmerhebel 13 ausgebildet. Alternativ kann das Ventilglied 91 auch drehfest mit einem T-förmigen Mitnehmerhebel 13 verbunden sein. In der geöffneten Stellung (Figur 1c) ist der Mitnehmerhebel 13 um eine (zweite) Schwenkachse S2 von der Schließstellung (Figur 1b) weg geschwenkt. Das Aufschwenken des Ventilglieds 91 wird bewirkt durch die Kraft der Rückstellfeder 39, welche auf einen Betätigungsschenkel 13a (oder Hebelarm) des T-förmigen Mitnehmerhebels 13 wirkt. In dem geöffneten Zustand des Entlüftungsventils 19 kann der Aktor 31, der gemäß Figur 1 als elektromagnetischer Linearantrieb realisiert ist, inaktiv, beispielsweise stromlos, sein. Indem der Aktor 31 aktiviert wird, kann eine Schließkraft auf den Mitnehmerhebel 13 erzeugt werden, die entgegengesetzt zu der Rückstellfeder 39 wirkt und wenigstens genauso groß wie die effektive Öffnungskraft der Rückstellfeder 39 sein muss, um eine Schließung des Ventilsitzes 90 mit dem Ventilglied 91 zu bewirken. Bei der bevorzugten Ausführung gemäß der Figuren 1a, 1b und 1c sind die Wirkachsen des Aktors 31 bzw. die Aktorachse A und die Wirkrichtung der Rückstellfeder 39 kollinear zueinander angeordnet und wirken auf dieselbe Krafteinleitungsstelle 32, die im Bereich der Atmosphäre atm angeordnet ist.

Die Kraft einer Feder, wie der Rückstellfeder 39, resultiert bekanntlich näherungsweise aus dem Produkt einer elastischen Federkonstante c und der Deformation der Längenänderung der Feder. Um den Mitnehmerhebel 13 und damit das Ventilglied 91 des Entlüftungsventils 19 in Richtung seiner Schließstellung (Figuren 1a, 1b) zu bewegen, muss mit dem Aktor 31 also eine vorzugsweise proportional größer werdende Kraft entgegen der Rückstellkraft der Rückstellfeder 39 auf den Mitnehmerhebel 13 aufgebracht werden. Eine schlagartige Änderung der Position des Ventilglieds 91 ist dadurch vorzugsweise vermieden.

Bei der Bewegung des Ventilglieds 91 von dessen maximal geöffneter Stellung (Figur 1c) in dessen Schließstellung (Figur 1b) bewegt sich der Mitnehmerhebel 13 drehend in eine (zweite) Betätigungsrichtung B₂ um die zweite Schwenkachse S₂. Die Schwenkachse S₂ ist festgelegt durch eine Klinge 21 an dem Gehäuse 11, die in einer Kerbe an einem Schenkelende 13b des Mitnehmerhebels 13 gebildet ist. Ein Zwangsmittel in Form der Feder 23 drückt den Mitnehmerhebels 13 auf diese Schwenklagerung. In dem in Figur 1b dargestellten Schließzustands des Entlüftungsventils 19 liegt näherungsweise ein Gleichgewicht zwischen der Kraft des Aktors 31 und der Rückstellkraft der Rückstellfeder 39 vor. Wie oben beschrieben, hat der Druckgradient zwischen der Atmosphäre atm und der Luftkammer 3 nahezu keine resultierende bzw. eine ausgeglichene Kraft auf das Ventilglied 91 zur Folge, weil an dem Kompensationskolben 95 in entgegengesetzter Richtung derselbe Druckgradient wirkt. Der Kolben 95 ist gegenüber dem Gehäuse 11 mit einer Membrandichtung 98 versehen.

Bei der bevorzugten Ausführung gemäß den Figuren 1a bis 1c ist der Mitnehmerhebel 13 als drehfest mit dem Ventilglied 91 verbundener, T-förmiger Körper mit Hebelarmen und -schenkeln 13a, 13b und 13c gebildet.

In dem in Figur 1b dargestellten Zustands sind sowohl das Entlüftungsventil 19 als auch das Belüftungsventil 15 geschlossen. Von diesem Zustand ausgehend kann das Entlüftungsventil 19 wieder in der (zweiten) Betätigungsrichtung B₂ um die (zweite) Schwenkachse S₂ zur Freigabe des Ventilsitzes 90 verschwenkt werden. Die mit dem Ventilsitz 19 in Dichtkontakt stehende wirksame Dichtfläche 93 des Ventilkörpers 91 kann, wie hier dargestellt, kugelförmig sein.

Wenn der Aktor 31 (ausgehend von dem geschlossenen Zustand gemäß Figur 1b) zusätzlich Stell- bzw. Schließkraft auf den Betätigungshebelarm 13a an der Krafteinleitungsstelle 32 einbringt, bewegt sich der Mitnehmerhebel 13 in einer (ersten) Betätigungsrichtung B₁ um eine (erste) Schwenkachse S₁, die gemäß der Figur 1a bzw. 1b durch den Rotationsmittelpunkt des kugelförmigen Ventilglieds 91 definiert ist. Das Ventilglied 91 rotiert mit seiner wirksamen zumindest teilsphärischen Dichtfläche 91 in dem Ventilsitz 90. Der Auflegerhebelarm 13b hebt nun entgegen der Haltekraft der Feder 23 von der Klinge 21 des Gehäuses 11 der Ventilanordnung 1 ab. Sowohl die Haltekraft der Feder 23 als auch die Betätigungskraft des Aktors 31 wirken als einander gegenseitig verstärkende Schließkräfte bezüglich des Entlüftungsventils 19.

Der mittlere, nach unten in die Luftkammer 3 ragende Hebelarm 13c des T-förmigen Mitnehmerhebels 13 kommt nun durch die rotatorische Betätigungsbewegung B₁ um die von dem Entlüftungsventilglied 91 definierte erste Schwenkachse S₁ in einen lösbaren Führungskontakt mit dem Belüftungsventil 15. Der untere Hebelarm 13c des Mitnehmerhebels 13 verschiebt den Kompensationskolben 55 weg von dem Belüftungsventilglied 51. Infolge der wegfallenden Druckkompensation an dem Belüftungsventilglied 51 kann der Druckgradient zwischen dem Druck der Druckluftversorgungsquelle bzw. dem Belüftungskanal 5 und dem Stelldruck in der Luftkammer 3 nun eine Druckkraft zum Öffnen des Ventilglieds 51 bewirken, welche das Ventilglied 51 von der dichtenden Verbindung mit dem Ventilsitz 50 löst. Auf diese Weise kann das Belüftungsventil 15 mittels des Aktors 31 geöffnet werden, wie in Figur 1a dargestellt. Für die erste Betätigungsbewegung B₁ um die erste Schwenkachse S₁ steht dem Aktor 31 eine Hebellänge zur Verfügung, die im Wesentlichen der Länge des Aktor-Hebelarms 13a entspricht. Für die Betätigungsbewegung B₂ um die zweite Schwenkachse S2 steht dem Aktor 31 eine Hebellänge zur Verfügung, die im Wesentlichen der kumulierten Länge der beiden oberen Hebelarme 13a und 13b entspricht.

Eine seitliche Führung des unteren Hebelarms 13c des Mitnehmerhebels 13 in dem Kolben 55, oder eine (nicht näher dargestellte) Führung eines der oberen beiden Hebelarme 13a, 13b des Mitnehmerhebels 13 in dem mit Atmosphärenluft gefluteten Außenbereich der Pneumatikventilanordnung 1 kann vorgesehen sein, um eine Verkippen des Mitnehmerhebels 13 in einer Richtung, die keiner Rotation um wenigstens eine der Schwenkachsen S₁ oder S₂ gleichkommt, zu verhindern.

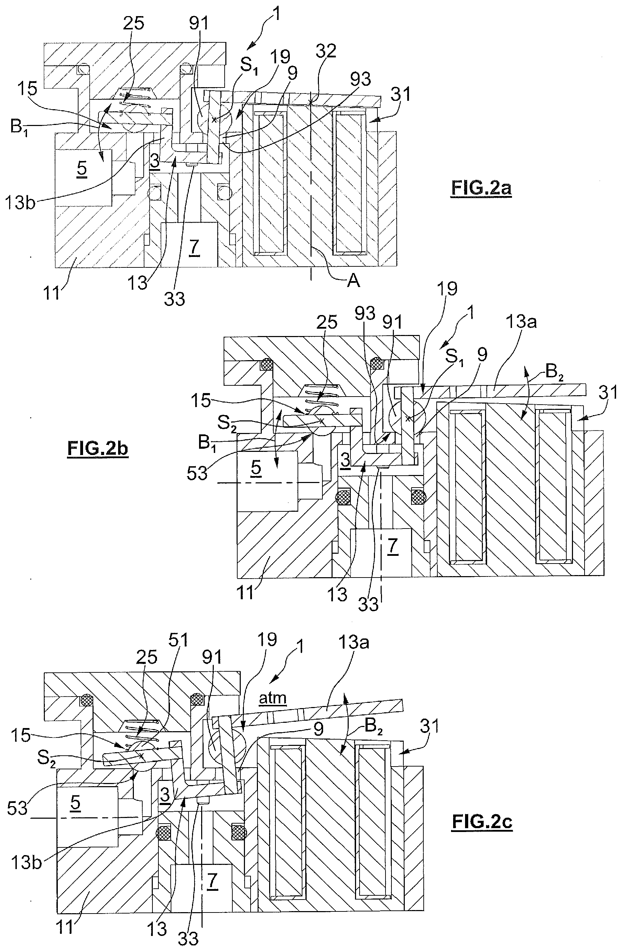

Im Folgenden wird auf die in den Figuren 2a, 2b und 2c dargestellte Ausführung einer nicht zur Erfindung gehörenden Pneumatikventilanordnung 1 eingegangen. Die in den Figuren 2a bis 2c dargestellte pneumatische Ventilanordnung 1 hat eine mechanisch gegenüber der zuvor beschriebenen bevorzugten Ausführung (Figuren 1a bis 1c) unterschiedliche Gestaltung, pneumatisch jedoch dieselbe Funktionalität. Der mechanische Grundaufbau der Ventilanordnung 1 gemäß der Figuren 2 ist gegenüber dem Aufbau der Ventilanordnung 1 frei von Kompensationskolben. Das Entlüftungsventil 19 gemäß der Figuren 2 weist keine Rückstellfeder auf. Die Feder 25 des Belüftungsventils wirkt als Haltefeder wie auch als Rückstellfeder, wie im Folgenden beschrieben wird. Der Betätigungsaktor 31 oder Ventilanordnungsaktor wirkt unmittelbar auf den Mitnehmerhebel 13, ohne zusätzlich beweglichen Aktor. Zu diesem Zweck ist bei der Ausführung gemäß der Figuren 2a bis 2c der Mitnehmerhebel 13 zumindest teilweise ferromagnetisch, vorzugsweise vollständige ferromagnetisch oder weist einen Abschnitt auf, der aus einem ferromagnetischen Material besteht oder mit einem aus einem ferromagnetischen Material bestehenden Einsatz bestückt ist. Beispielsweise kann der Mitnehmerhebel 13 an der Krafteinleitungsstelle 32 mit Permanentmagneten ausgeführt sein, sodass der Aktor 31 wahlweise eine anziehende Betätigungskraft, keine Betätigungskraft oder eine abstoßende Betätigungskraft auf den Mitnehmerhebel 13 ausüben kann.

Der zumindest teilweise ferromagnetische Abschnitt des Mitnehmerhebels 13 ist in einem Hebelarmabschnitt 13a ausgebildet, der von der Wirkachse A des hier elektromagnetischen Aktors 31 gekreuzt wird. An dem Kreuzungspunkt der Achse A und des Mitnehmerhebels 13 ist die Krafteinleitungsstelle 32 von dem Aktor 31 in den Mitnehmerhebel 13 definiert. Der Mitnehmerhebel 13 ist bei der Ausführung gemäß Figur 2a bis 2c aus mehreren, vorzugsweise vier, Teilstücken zusammengesetzt, von denen zwei sich jeweils durch je eine Schließkugel bzw. je ein Ventilglied 91, 51 des Entlüftungsventils 19 bzw. des Belüftungsventils 15 erstecken. Die Abschnitte des Mitnehmerhebels 13, die sich durch eine der beiden Ventilkugelglieder 91 bzw. 51 erstrecken, realisieren eine drehfeste Verbindung des Mitnehmerhebels 13 und der beiden Ventilglieder 15 und 19. Alternativ ist es auch denkbar, dass der Mitnehmerhebel 13 und eines oder beide der Ventilglieder 51, 91, einstückig realisiert sind.

Figur 2a zeigt die Ventilanordnung 1 mit geöffnetem Belüftungsventil 15 und geschlossenem Entlüftungsventil 19. Um das Belüftungsventil 15 aus der in Figur 2b dargestellten geschlossenen Stellung in der ersten Betätigungsrichtung B₁ um die erste Schwenkachse S₁ zu bewegen, wird der hier elektromagnetische Aktor 31 aktiviert und übt eine anziehende Betätigungskraft auf den ferromagnetischen Teil des Mitnehmerhebels 13 aus. Die Betätigungskraft des Aktors 31 auf den Mitnehmerhebel 13 hebt das Ventilglied 51 von dem Ventilsitz 50 am Gehäuse 11 der Pneumatikventilanordnung 1 entgegen der Rückstellkraft der Feder 25 an. Wenn die Betätigungskraft des Aktors 31 verringert wird, kann die Rückstellkraft der Feder 25 des Ventilglieds 51 und des Belüftungsventils 15 wieder in schließenden Eingriff mit dem Ventilsitz 50 kommen. Die Rückstellkraft der Feder 25 verschwenkt dann das Belüftungsventilglied 51 um die erste Schwenkachse S₁ in der ersten Betätigungsrichtung B₁, bis es aus einer geöffneten Stellung in eine geschlossene Stellung kommt.

Die erste Schwenkachse S₁ ist festgelegt durch das Rotationszentrum der kugelförmigen Schließwirkungsfläche 93 des Kugelventilglieds 91 des Entlüftungsventils 19. Der Mitnehmerhebel 13 erstreckt sich durch den Körper des Kugelventilglieds 91 hindurch von der Drucksenkenseite zu der Steuerdruckseite. Indem durch eine variable Aktorkraft eine graduelle Verschwenkung des Mitnehmerhebels 13 um die erste Schwenkachse S₁ bewirkt wird, kann eine graduelle, stufenlos einstellbare Betätigungsbewegung B₁ des Belüftungsventils 15 bei geschlossenen Entlüftungsventil 19 um die erste Schwenkachse S₁ erfolgen. Auf diese Weise lässt sich, abhängig von der Art des pneumatischen Aktors, der an dem Steuerluftkanal 7 angebunden ist, ein konstanter Stelldruck oder eine konstante Steuervolumenströmung von dem Luftdruckversorgungskanal 5 zu dem Steuerluftkanal 7 und von dort zu dem pneumatischen Aktor (nicht abgebildet) einstellen.

Wenn die Kraft des Aktors 31 der Pneumatikventilanordnung 1 ausgehend von dem in Figur 2b dargestellten konstanten Haltezustand reduziert wird, kann der Stelldruck in der Luftkammer 3 des Entlüftungsventils 19 des Ventilglieds 91 von seinem Ventilsitz 90 am Gehäuse 11 anheben, sodass Druckluft aus der Luftkammer 3 und dem darin mündenden Steuerluftkanal 7 sowie an dem Steuerluftkanal 7 angeschlossenen pneumatischen Aktor (nicht abgebildet) zur Drucksenke, insbesondere der Atmosphäre atm, hin entweicht. Zum Anheben des Ventilglieds 91 des Entlüftungsventils 19 von dem Ventilsitz 90 schwenkt der Hebel 13 in einer zweiten Betätigungsrichtung B₂ um die zweite Schwenkachse S2. Die zweite Schwenkachse S2 ist definiert durch die zumindest teilweise sphärische Dichtwirkungsfläche 53 des Kugelventilglieds 51 des Belüftungsventils 15, mit welcher das Kugelventilglied 51 in abdichtendem Berührkontakt auf den Ventilsitz 50 am Gehäuse 11 sitzt. Zur Führung des Hebelarms 13 ist in der Luftkammer 3 ein gehäusefester Stift 33 angeordnet, der durch eine (nicht abgebildete) Öffnung des Mitnehmerhebels 13 ragt.

Ähnlich wie bei der vorherigen in den Figuren 1a bis 1c dargestellten Ausführung ist die effektive Hebelwirkung durch den Mitnehmerhebel 13 zum Bewegen des Hebels 13 in der zweiten Betätigungsrichtung B2 um die zweite Schwenkachse S₂, also zum Verschließen des Entlüftungsventils 19, so groß wie die kumulierte Länge der Hebelarme 13a, 13b zwischen der zweiten Schwenkachse S₂ und der Krafteinleitungsstelle 32. Um den Mitnehmerhebel 13 wie oben beschrieben um die erste Schwenkachse S₁ zu verschwenken, besteht für den Aktor nur eine effektive Hebellänge entsprechend des ersten Hebelarms 13a zwischen der Schwenkachse S₁ und der Krafteinleitungsstelle 32 bereit (Figur 2a). Ausgehend von der ersten Schwenkachse S₁ ist die effektive Hebellänge des Aktorhebels 13a in etwa genau so groß wie die effektive Hebellänge des Belüftungsventils-Öffnungsarms 13b (bzw. in Figur 1: 13c).

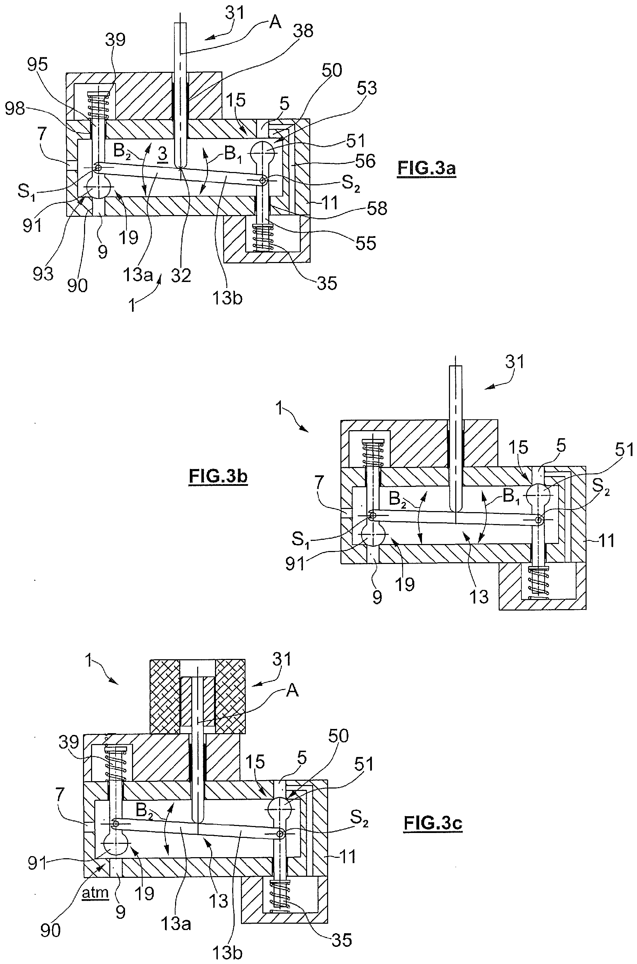

Im Folgenden wird besonders auf die in den Figuren 3a, 3b und 3c dargestellte bevorzugte Ausführung einer erfindungsgemäßen Pneumatikventilanordnung 1 eingegangen. Von den zuvor beschriebenen Pneumatikventilanordnungen 1 gemäß der Figuren 1a bis 1c bzw. 2a bis 2c unterscheidet sich die Ausführung, die in den Figuren 3a bis 3c dargestellt ist, vor allem dadurch, dass der Mitnehmerhebel 13 vollständig innerhalb der Luftkammer 3 angeordnet ist. Ferner ist der Mitnehmerhebel 13 bei der Ausführung gemäß der Figuren 3a bis 3c mit keinem der Ventilglieder 51, 91 drehfest verbunden.

Wie in Figur 3c dargestellt kann der Aktor 31 der pneumatischen Ventilanordnung (wie bei der in Figur 1 dargestellten Ausführung) als elektromagnetischer Aktor mit einer Stellstange realisiert sein. Es ist auch denkbar, dass der Aktor 31 als pneumatischer oder hydraulischer Aktor, beispielsweise mit einer Stellstange, realisiert ist. Ebenfalls ist es denkbar, dass der Aktor 31 oder zumindest der bewegliche Teil des Aktors, also die Stellstange, vollständig innerhalb des steuerluftführenden Gehäuses, beispielsweise innerhalb der Steuerluftkammer 3, angeordnet ist. Dann könnte auf die dynamische Dichtung 38 an der Stellstange verzichtet werden. Die dynamische Dichtung 38 kann beispielsweise als Membran oder O-Ring realisiert sein.

Bei den Figuren 3a bis 3c sind das Belüftungsventil 15 und das Entlüftungsventil 19 als linearbewegliche Hubventile mit einem Kolben 55 bzw. 95 ausgestaltet. An einem stirnseitigen Ende des jeweiligen Kolbens 55 bzw. 95 ist ein Ventilglied 51 bzw. 91 befestigt. Wie abgebildet, kann das Ventilglied 51 bzw. 91 eine teilkugelförmige Dichtwirkungsfläche 53 bzw. 93 aufweisen. Andere Geometrien sind denkbar.

Wie in den Figuren 3a bis 3c bei dem Belüftungsventil 15 deutlich dargestellt, kann der Kolben 55 druckentlastet sein, indem das fußseitige Ende des Kolbens 55 in einer Ausgleichskammer geführt ist, die pneumatisch über einen Kompensationskanal 56 mit dem Belüftungskanal 5 verbunden ist. Auch der Entlüftungskolben 95 kann als Druckentlastungskolben realisiert sein, indem ein (nicht im Detail abgebildeter) Kompensationskanal 96 von der Drucksenke oder dem Entlüftungskanal zum fußseitigen Ende des Entlüftungskolbens 95 geführt ist.

Zwischen den Kammern, die an dem fußseitigen Ende des Kolbens 55 bzw. 95 angeordnet sind, und der Luftkammer 3 ist eine dynamische Dichtung 58 bzw. 98 vorgesehen, sodass entlang des Kolbens 55, 95 Leckage-Druckluftströmungen vermieden sind.

Das Entlüftungsventil 19 hat eine Rückstellfeder 39, die den Entlüftungskolben 95 in Richtung der in Figur 3c dargestellten geöffneten Entlüftungsventilstellung vorspannt. Das Belüftungsventil 15 weist eine Rückstellfeder 35 auf, die das Belüftungsventil 15 in die ebenfalls in Figur 3c dargestellte Schließstellung des Belüftungsventils 15 vorspannt. Der Aktor 31 kann gemäß Figur 3c für einen passiven vorzugsweise stromlosen Zustand insbesondere einen Notentlüftungszustand, entlüftend ausgestaltet sein.

Ausgehend von dem in Figur 3c dargestellten Druckabsenkungszustand, in dem Druclduft von dem Steuerluftkanal 7 durch die Druckkammer 3 und den Entlüftungskanal 9 zur Atmosphäre entlassen werden kann, kann die Ventilanordnung 1 betätigt werden, um von dem Haltezustand gemäß Figur 3b von dort in den Druckanhebungszustand gemäß Figur 3a zu gelangen. Zu diesem Zweck wird der Aktor 31 betätigt, um mit der Aktorstange entlang der Aktorachse A eine Betätigungskraft auszuüben, die in der Krafteinleitungsstelle 32 auf den Mitnehmerhebel 13 wirkt.

Der Mitnehmerhebel 13 ist sowohl an dem Belüftungsventil 15 als auch an dem Entlüftungsventil 19 drehbar angelenkt. Für die zweite Betätigungsbewegungrichtung B₂ und die zweite Schwenkachse S₂, welche sich in der Schließstellung des Belüftungsventils 15 an diesem abstützt, kann der Mitnehmerhebel 13 nun verschwenkt werden. Bei der Verschwenkung des Mitnehmerhebels 13 in der zweiten Betätigungsbewegungsrichtung B₂ um die zweite Schwenkachse S₂, nimmt der Mitnehmerhebel 13 das Entlüftungsventil 19 mit.

Wenn, wie bei dem abgebildeten Beispiel der Figuren 3a bis 3c, die Hebelarme 13a und 13b zwischen der Krafteinleitungsstelle 32 und den Anlenkpunkten S₁ an dem Entlüftungsventil 19 und dem Anlenkpunkt S₂ an dem Belüftungsventil 15 im Wesentlichen gleich groß sind, ist die Rückstellkraft in der Entlüftungs-Rückstellfeder 39 kleiner als die Rückstellkraft in der Belüftungs-Rückstellfeder 35, damit die Betätigung des Mitnehmerhebels 13 durch den Aktor 31 das Belüftungsventil 15 in dem geschlossenen Zustand belässt und nur das Entlüftungsventil 19 in Betätigungsrichtung B₂ zu dessen Schließstellung bewegt. Alternativ oder zusätzlich zu unterschiedlich kräftigen Stellfedern 35, 39 können für die Krafteinleitungsstelle unterschiedliche Längen der Hebelarme 13a, 13b vorgesehen sein.

Zum Schließen des Entlüftungsventils 19 schwenkt der Aktor 31 den Mitnehmerhebel 13 um die an dem geschlossenen Belüftungsventil 15 ortsfest angeordnete Schwenkachse S₂, bis das Entlüftungsventil 19 seine Schließstellung einnimmt, wie in Figur 3b dargestellt. Wenn die Betätigungskraft des Aktors 31 weiter erhöht wird, beginnt sich der Mitnehmerhebel 13 anschließend in der ersten Betätigungsbewegungsrichtung B₁ um die erste Schwenkachse S₁ zu bewegen. Die erste Schwenkachse S₁ ist ortsfest an dem geschlossenen Entlüftungsventil 19 gelagert. Wenn der Aktor 31 den Mitnehmerhebel 13 ausgehend von dem Zustand gemäß Figur 3b weiter verschwenkt, erhöht der Aktor 31 die Schließkraft auf das Entlüftungsventil 19 und drückt mit dem Mitnehmerhebel 13 an dessen Anlenkung S₂ an dem Belüftungsventil 15 gegen die Rückstellfeder 35 des Belüftungsventils 15. Dadurch kann das Belüftungsventils 15 geöffnet werden, wie in Figur 3a abgebildet.

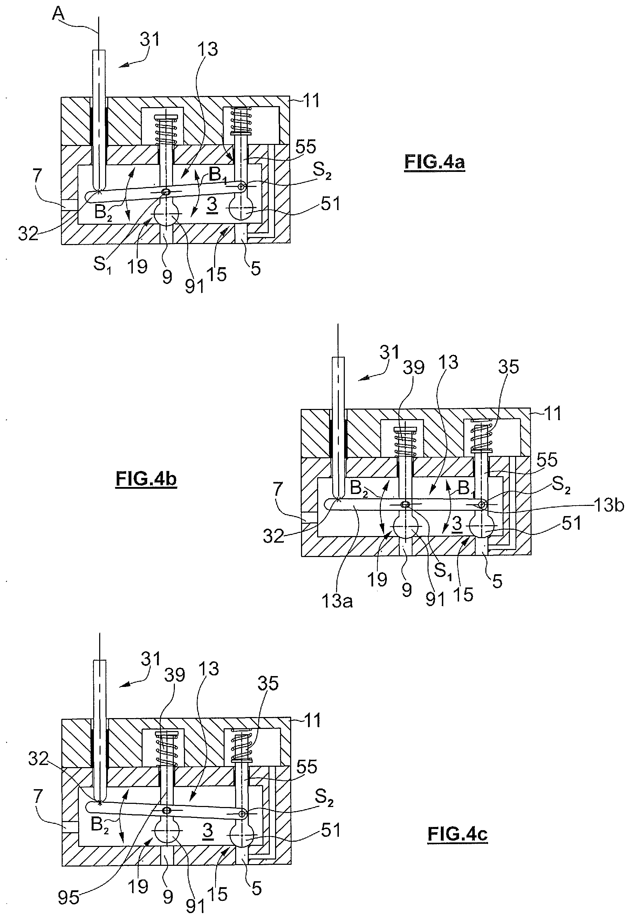

Im Folgenden wird die in den Figuren 4a, 4b und 4c dargestellte bevorzugte Ausführung beschrieben.

Die bevorzugte Ausführung gemäß der Figuren 4a bis 4c unterscheidet sich von der Ausführung gemäß der Figuren 3a bis 3c im Wesentlichen nur durch die Anbindung der Betätigungskinematik. Gemäß der Figuren 3a bis 3c ist die Stellstange des Aktors 31 bzw. die Krafteinleitungsstelle 32 zwischen dem Belüftungsventil 15 und dem Entlüftungsventil 19 angeordnet. Gemäß der Figuren 4a bis 4c ist der Entlüftungsventil-Kolben 95 zwischen dem Belüftungsventil-Kolben 55 und der Stellstange des Aktors 31 angeordnet. Die effektive Hebelwirkungslänge von der zweiten Schwenkachse S₂ bis zu der Krafteinleitungsstelle 32 des Aktors 31 entspricht dadurch der kumulierten Länge der Hebelarme 13a und 13b. Die effektive Hebellänge des Arms 13a um die erste Schwenkachse S₁, welche ortsfest an dem geschlossenen Entlüftungsventil 19 festgelegt ist, stellt eine Hebellänge zwischen der Krafteinleitungsstelle 32 und der Schwenkachse S₁ bereit, die im Wesentlichen genau so groß ist wie die effektive Länge des Hebelarms 13b zwischen der Schwenkachse S₁ und dem Belüftungsventil 15.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Pneumatikventilanordnung
- 3: Luftkammer
- 5: Belüftungskanal
- 7: Steuerluftkanal
- 9: Entlüftungskanal
- 11: Gehäuse
- 13: Mitnehmerhebel
- 13a, 13b, 13c: Hebelarm
- 15: Belüftungsventil
- 19: Entlüftungsventil
- 21: Klinge
- 23: Feder
- 31: Aktor
- 32: Krafteinleitungsstelle
- 33: Stift
- 35, 39: Rückstellfeder
- 38: dynamische Aktordichtung
- 50, 90: Ventilsitz
- 51, 91: Ventilkörper
- 53, 93: Dichtwirkfläche
- 55, 95: Kolben
- 56, 96: Kompensationskanal
- 58, 98: dynamische Dichtung

- atm: Atmosphäre
- A: Aktorachse
- B1, B2: Betätigungsbewegung
- S1, S2: Schwenkachse

## Patentansprüche

1. Pneumatisch betriebenes Feldgerät für eine prozesstechnische Anlage, wie eine chemische Anlage, eine lebensmittelverarbeitende Anlage, eine Kraftwerksanlage, umfassend eine Pneumatikventilanordnung (1), die einen Luftversorgungskanal (5) zum Empfangen von Druckluft von einer Druckluftversorgungsquelle, einen Steuerluftkanal (7) zum Be- und Entlüften eines pneumatischen Aktors des Feldgeräts und einen Entlüftungskanal (9) zum Abgeben von Druckluft an eine Drucksenke, wie die Atmosphäre (atm);
ein Entlüftungsventil (19) zum Öffnen und/oder Schließen des Entlüftungskanals (9) und ein Belüftungsventil (15) zum Öffnen und/oder Schließen des Luftversorgungskanals (5); und
einen schwenkbaren Mitnehmerhebel (13) zum gemeinsamen Betätigen des Belüftungsventils (15) und des Entlüftungsventils (19) umfasst, wobei der Mitnehmerhebel (13) das Entlüftungsventil (19) in dessen Schließstellung hält, während er das Belüftungsventils (15) aus dessen Schließstellung öffnet, wobei das Belüftungsventil (15) und das Entlüftungsventil (19) durch den Mitnehmerhebel (13) gekoppelt sind, der sich für eine rotatorische Betätigungsbewegung (B1) zum Öffnen des Belüftungsventils (15) an dem Entlüftungsventil (19) in dessen Schließstellung abstützt, wobei der Mitnehmerhebel (13) derart an einem ortsfesten Teil eines Gehäuses (11) der Pneumatikventilanordnung (1), an dem Belüftungsventil (15) und/oder an dem Entlüftungsventil (19) gelagert ist, dass der Mitnehmerhebel (13) sich für die rotatorische Betätigungsbewegung (B1) zum Öffnen des Belüftungsventils (15) um eine erste Schwenkachse (S1) dreht und dass der Mitnehmerhebel (13) sich für eine rotatorische Betätigungsbewegung (B2) zum Schließen des Entlüftungsventils (19) um eine zweite Schwenkachse (S2) dreht, die parallel zur ersten Schwenkachse (S1) orientiert ist, wobei das Belüftungsventil (15) und/oder das Entlüftungsventil (19) mit Druckkraftkompensationsmitteln, wie einem Kompensationskolben (55, 95), ausgestattet sind/ist.

2. Feldgerät nach Anspruch 1, wobei sich die zweite Schwenkachse (S2) von der ersten Schwenkachse (S1) unterscheidet.

3. Feldgerät nach Anspruch 1 oder 2, wobei ein Zwangsmittel, wie eine Feder (23, 25), den Mitnehmerhebel (13) für eine der rotatorischen Betätigungsbewegungen (B1, B2) gegen ein Widerlager vorspannt, um den Mitnehmerhebel (13) relativ zur zweiten Schwenkachse (S2) drehbar zu sichern.

4. Feldgerät nach Anspruch 3, wobei die rotatorische Betätigungsbewegung (B1) zum Öffnen des Belüftungsventils (15) um die erste Schwenkachse (S1) die der zweiten Schwenkachse (S2) zugeordnete Sicherung löst.

5. Feldgerät nach einem der Ansprüche 1 bis 4, wobei die effektive Hebellänge zwischen der jeweiligen Schwenkachse (S1, S2) und einer Krafteinleitungsstelle des Mitnehmerhebels (13) für die beiden Betätigungsbewegungen (B1, B2) gleich oder unterschiedlich ist.

6. Feldgerät nach einem der Ansprüche 1 bis 5, wobei die Pneumatikventilanordnung (1) ferner einen Aktor (31), wie ein elektrischer Aktor, ein pneumatischer Aktor, ein hydraulischer Aktor oder dergleichen, zum Betätigen der Pneumatikventilanordnung (1) umfasst, wobei der Mitnehmerhebel (13) für die beiden Betätigungsbewegungen (B1, B2) durch den selben Aktor (31) betätigt wird.

7. Feldgerät nach Anspruch 6, wobei die Krafteinleitung des Aktors (31) zum Bewegen des Mitnehmerhebels (13) für die rotatorische Betätigungsbewegung (B1) zum Öffnen des Belüftungsventils (15) auf das Entlüftungsventil (19) schließkraftverstärkend wirkt.

8. Feldgerät nach Anspruch 6 oder 7, wobei der Aktor (31), der an einem ortsfesten Teil eines Gehäuses (11) der Pneumatikventilanordnung (1) angeordnet ist, eine Krafteinleitungsstelle zum Betätigen des Mitnehmerhebels (13) außerhalb der drei Luftkanäle (5, 7, 9) und/oder einer Luftkammer (3), in die die drei Luftkanäle (5, 7, 9) münden wie der Atmosphäre, definiert.

9. Feldgerät nach einem der vorstehenden Ansprüche, wobei der Mitnehmerhebel (13) mit einem Ventilglied (51, 91) des Belüftungsventils (15) und/oder des Entlüftungsventils (19) starr verbunden ist und/oder wobei der Mitnehmerhebel (13) an einem Ventilglied (51, 91) des Belüftungsventils (15) und/oder des Entlüftungsventils (19) gelenkig angebunden ist.

10. Feldgerät nach einem der vorstehenden Ansprüche, wobei der Mitnehmerhebel (13) mit einer Führung relativ zum Gehäuse (11) der Pneumatikventilanordnung (1) schwimmend gelagert ist, wobei die Führung wenigstens einen Stift (33) oder wenigstens zwei Stifte zum innenseitigen oder außenseitigen Führen des Mitnehmerhebels (13) aufweist oder wobei die Führung wenigstens eine oder zwei Innenseitenwände einer Luftkammer (3), in die drei Luftkanäle (5, 7, 9) münden, umfasst.

11. Feldgerät nach einem der vorstehenden Ansprüche, wobei das Belüftungsventil (15) und/oder das Entlüftungsventil (19) einen Ventilkörper (51, 91) aufweist, dessen Dichtwirkfläche (53, 93) zumindest teilweise sphärisch geformt ist und/oder dessen Dichtwirkfläche (53, 93) aus einem gehärteten Stahl oder Keramik gefertigt ist.

12. Feldgerät nach einem der Ansprüche 6,7,8, wobei in einem unbetätigten, stromlosen Zustand eines elektrischen Aktors (31) der Pneumatikventilanordnung (1) das Belüftungsventil (15) geschlossen und das Entlüftungsventil (19) geöffnet ist.

13. Feldgerät nach einem der vorstehenden Ansprüche, ferner umfassend einen einfach pneumatisch wirkenden Stellantrieb mit Federrückstellung oder einen pneumatisch doppelt wirkenden Stellantrieb, der pneumatisch mit dem Steuerluftkanal (7) kommuniziert.

14. Feldgerät nach Anspruch 13, wobei der pneumatisch doppelt wirkende Stellantrieb eine erste pneumatische Arbeitskammer und eine zweite pneumatische Arbeitskammer aufweist, die pneumatisch voneinander getrennt sind und gegenläufige Wirkrichtungen aufweisen, und das Feldgerät eine weitere insbesondere identisch ausgebildete Pneumatikventilanordnung (1) aufweist, wobei die erste Arbeitskammer mit dem Steuerluftkanal der ersten Pneumatikventilanordnung (1) und die zweite pneumatische Arbeitskammer mit dem pneumatischen Steuerluftkanal der weiteren Pneumatikventilanordnung (1) verbunden ist.

15. Feldgerät nach Anspruch 13 oder 14, ferner umfassend eine pneumatische Druckluftquelle, wie einen Drucklufttank, einen Kompressor, eine Versorgunsleitung, die pneumatisch mit dem Luftversorgungskanal verbunden ist.

## Claims

1. Pneumatically actuated field device for a processing plant, such as a chemical plant, a foodstuff processing plant, a power plant or the like, comprising a pneumatic valve arrangement (1), comprising:
an air supply conduit (5) for receiving pressurized air from a source of pressurized air, a control air conduit (7) for aerating and/or venting a pneumatic actor of the field device and a venting conduit (9) for discharging pressurized air to a pressure sink, such as the atmosphere (atm);
a venting valve (19) for opening and/or closing the venting conduit (9) and an aerating valve (15) for opening and/or closing the air supply conduit (5); and
a pivotable carrier lever (13) for common actuation of the aerating valve (15) and of the venting valve (19), the carrier lever (13) holding the venting valve (19) in its closed position while the carrier lever (13) opens the aerating valve (15) from its closed position,
wherein the aerating valve (15) and the venting valve (19) are coupled via the carrier lever (13), the carrier lever (13) being supported for a [first] rotational actuating movement (Bi) for opening the aerating valve (15) on the venting valve (19) in the closed position thereof,
wherein the carrier lever (13) is mounted, in particular mounted to a stationary part of a housing (11) of the pneumatic valve arrangement (1), to the aerating valve (15) and/or to the venting valve (19), such that the carrier valve rotates around a first pivot axis (S1) for the [first] rotational actuating movement (B1) for opening the aerating valve (15) and/or such that the carrier lever (13) rotates around a second pivot axis (S2) for a [second] actuating movement (B2) for closing the venting valve (19)parallel to the first pivot axis (Si), wherein the aerating valve (15) and/or the venting valve (19) are provided with a pressure-force-compensation, such as a compensation piston (55, 95).

2. Field device of claim 1, wherein the second pivot axis (S2) is different from the first pivot axis (S1).

3. Field device of claim 1 or 2, wherein a biasing means, such as a spring (23, 25) urges the carrier lever (13) for one of the [first and second] rotational actuating movements (B1, B2) against a counter bearing, preferably for the [second] rotational actuating movement (B2) for closing the venting valve (19), in order to rotatably secure the carrier lever (13) relative to the second pivot axis (S2).

4. Field device of claim 3, wherein the [first] rotational actuator movement (B1) for opening the venting valve (15) around the first pivot axis (S1) releases the safety mechanism associated with the second pivot axis (S2).

5. Field device of one of the claims 1 to 4, wherein the effective lever length between the respective pivot axis (S1, S2) and a force input position of the carrier lever (13) is the same or different for the two actuating movements (B1, B2).

6. Field device of one of the claims 1 to 5, the pneumatic valve arrangement (1) further comprising an actor (31), such as an electronic actor, in particular a piezo-electric actor or an electromagnetic actor, a pneumatic actor, a hydraulic actor, or the like, for operating Field device, wherein the carrier lever (13) for the two actuator movements (B1, B2) is operated by the same actor (31).

7. Field device of claim 6, wherein preferably the force input of the actor (31) for moving the carrier lever (13) for the [first] rotational actuating movement (B1) for opening the aerating valve (15) acts in a closing-force-enhancing manner onto the venting valve (19).

8. Field device of claim 6 or 7, wherein the actor (31), which arranged on a stationary part of the housing (11) of the pneumatic valve arrangement (1), defines a force input position for operating the carrier lever (13) outside of the three air conduits (5, 7, 9) and/or of an air chamber (3) into which the three air channels (5, 7, 9) lead, such as the atmosphere.

9. Field device of one of the preceding claims, wherein the carrier lever (13) is rigidly connected to a valve member (51, 91) of the aerating valve (15) and/or of the venting valve (19), and/or wherein the carrier lever (13) is hingedly connected to a valve member (51, 91) of the aerating valve (15) and/or of the venting valve (19).

10. Field device according to one of the preceding claims, wherein the carrier lever (13) is mounted in a fully floating manner relative to the housing (11) of the pneumatic valve arrangement via a guide, wherein the guide comprises at least one pin (33) or at least two pins for internally guiding or externally guiding the carrier lever, or wherein the guide comprises at least one or two interior side walls of an air chamber (3) into which the three air conduits (5, 7, 9) lead.

11. Field device according to one of the preceding claims, wherein the aerating valve (15) and/or the venting valve (19) comprises a valve member (51, 91) including a sealing surface (53, 93) being formed at least partially spherical, and/or including a sealing surface (53, 93)being made of a hardened steel or ceramics.

12. Field device according to one of the claims 6, 7, or 8, wherein in a non-actuated, preferably electricity-free, condition of an electronic actor (31) of the pneumatic valve arrangement (1), the aerating valve (15) is closed and the venting valve (19) is opened.

13. Field device according to one of the preceding claims, further comprising a spring biased single action control drive or a pneumatic double action control drive, which pneumatically communicates with the control air conduit (7).

14. Field device according to claim 13, wherein the pneumatic double action control drive has a first pneumatic actuation chamber and a second pneumatic actuation chamber pneumatically separated from one another and having opposite actuation directions, and the field device have a further, in particular identically configured, pneumatic valve arrangement (1), wherein the first actuator chamber is connected with the control air conduit of the first pneumatic valve arrangement (1) and wherein the second actuator chamber is connected with the control air conduit of the further pneumatic valve arrangement (1).

15. Field device according to claim 13 or 14, further comprising a source of pressurized air, such as a tank of compressed air, a compressor, a supply line, pneumatically connived to the air supply conduit.

## Revendications

1. Appareil de champ actionné de manière pneumatique pour une installation industrielle, telle qu'une installation chimique, une installation de transformation alimentaire, une centrale nucléaire, comportant
un ensemble de soupapes pneumatiques (1) comportant un canal d'alimentation en air (5) pour la réception d'air comprimé à partir d'une source d'alimentation en air comprimé, un canal d'air de commande (7) pour l'arrivée et l'évacuation d'air d'un acteur pneumatique de l'appareil de champ et un canal d'évacuation d'air (9) pour la distribution d'air comprimé à un puits de pression, tel que l'atmosphère (atm) ;
une soupape d'évacuation d'air (19) pour l'ouverture et/ou la fermeture du canal d'évacuation d'air (9) et une soupape d'aération (15) pour l'ouverture et/ou la fermeture du canal d'alimentation en air (5) ; et
un levier d'entraînement pivotant (13) pour l'actionnement conjoint de la soupape d'aération (15) et de la soupape d'évacuation d'air (19), dans lequel le levier d'entraînement (13) maintient la soupape d'évacuation d'air (19) dans sa position de fermeture tandis qu'il ouvre la soupape d'aération (15) à partir de la position de fermeture de celle-ci, dans lequel la soupape d'aération (15) et la soupape d'évacuation d'air (19) sont accouplées par le biais du levier d'entraînement (13), lequel s'appuie sur la soupape d'évacuation d'air (19) dans la position de fermeture de celle-ci pour le mouvement d'actionnement rotatif (B1) destiné à l'ouverture de la soupape d'aération (15), dans lequel le levier d'entraînement (13) est monté de telle façon sur une partie fixe d'un boîtier (11) de l'ensemble de soupapes pneumatiques (1), sur la soupape d'aération (15) et/ou sur la soupape d'évacuation d'air (19), que le levier d'entraînement (13) tourne autour d'un premier axe de pivotement (S1) pour le mouvement d'actionnement rotatif (B1) destiné à l'ouverture de la soupape d'aération (15) et que le levier d'entraînement (13) tourne autour d'un deuxième axe de pivotement (S2) orienté parallèlement au premier axe de pivotement (S1) pour le mouvement d'actionnement rotatif (B2) destiné à la fermeture de la soupape d'évacuation d'air (19), dans lequel la soupape d'aération (15) et/ou la soupape d'évacuation d'air (19) est/sont équipée(s) de moyens de compensation de la force de compression, tels qu'un piston de compensation (55, 95).

2. Appareil de champ selon la revendication 1, dans lequel le deuxième axe de pivotement (S2) se différencie du premier axe de pivotement (S1).

3. Appareil de champ selon la revendication 1 ou 2, dans lequel un moyen de contrainte, tel qu'un ressort (23, 25), précontraint le levier d'entraînement (13) contre une butée pour l'un des mouvements d'actionnement rotatifs (B1, B2), afin de bloquer le levier d'entraînement (13) de façon rotative par rapport au deuxième axe de pivotement (S2).

4. Appareil de champ selon la revendication 3, dans lequel le mouvement d'actionnement rotatif (B1) destiné à l'ouverture de la soupape d'aération (15) autour du premier axe de pivotement (S1) libère le blocage associé au deuxième axe de pivotement (S2).

5. Appareil de champ selon l'une des revendications 1 à 4, dans lequel la longueur de levier effective entre les axes de pivotement (S1, S2) respectifs et une zone d'introduction de force du levier d'entraînement (13) est identique ou différente pour les deux mouvements d'actionnement rotatifs (B1, B2).

6. Appareil de champ selon l'une des revendications 1 à 5, dans lequel l'ensemble de soupapes pneumatiques (1) comporte en outre un acteur (31), tel qu'un acteur électrique, un acteur pneumatique, un acteur hydraulique ou autre, pour l'actionnement de l'ensemble de soupapes pneumatiques (1), dans lequel le levier d'entraînement (13) est actionné par le même acteur (31) pour les deux mouvements d'actionnement rotatifs (B1, B2).

7. Appareil de champ selon la revendication 6, dans lequel l'introduction de force par l'acteur (31) pour le déplacement du levier d'entraînement (13) pour le mouvement d'actionnement rotatif (B1) destiné à l'ouverture de la soupape d'aération (15) agit sur la soupape d'évacuation d'air (19) de manière à renforcer la force de fermeture.

8. Appareil de champ selon la revendication 6 ou 7, dans lequel l'acteur (31), lequel est disposé sur une partie fixe d'un boîtier (11) de l'ensemble de soupapes pneumatiques (1), définit une zone d'introduction de force pour l'actionnement du levier d'entraînement (13) à l'extérieur des trois canaux d'air (5, 7, 9) et/ou d'une chambre à air (3) dans laquelle débouchent les trois canaux d'air (5, 7, 9).

9. Appareil de champ selon l'une des revendications précédentes, dans lequel le levier d'entraînement (13) est relié fixement à un organe de soupape (51, 91) de la soupape d'aération (15) et/ou de la soupape d'évacuation d'air (19) et/ou dans lequel le levier d'entraînement (13) est connecté de façon articulée à un organe de soupape (51, 91) de la soupape d'aération (15) et/ou de la soupape d'évacuation d'air (19).

10. Appareil de champ selon l'une des revendications précédentes, dans lequel le levier d'entraînement (13) est monté de façon flottante avec un guide par rapport au boîtier (11) de l'ensemble de soupapes pneumatiques (1), dans lequel le guide présente au moins une tige (33) ou au moins deux tiges pour le guidage du levier d'entraînement (13) sur le côté intérieur ou le côté extérieur ou dans lequel le guide comporte au moins une ou deux parois latérales intérieures d'une chambre à air (3) dans laquelle débouchent les trois canaux d'air (5, 7, 9).

11. Appareil de champ selon l'une des revendications précédentes, dans lequel la soupape d'aération (15) et/ou la soupape d'évacuation d'air (19) présente un corps de soupape (51, 91) dont la surface active d'étanchéité (53, 93) est au moins partiellement sphérique et/ou dont la surface active d'étanchéité (53, 93) est réalisée en acier durci ou en céramique.

12. Appareil de champ selon l'une des revendications 6, 7 et 8, dans lequel, dans un état non actionné sans courant d'un acteur électrique (31) de l'ensemble de soupapes pneumatiques (1), la soupape d'aération (15) est fermée et la soupape d'évacuation d'air (19) est ouverte.

13. Appareil de champ selon l'une des revendications précédentes, comportant en outre un actionneur pneumatique à action simple, avec rappel par ressort, ou un actionneur pneumatique à double action, lequel communique pneumatiquement avec le canal d'air de commande (7).

14. Appareil de champ selon la revendication 13, dans lequel l'actionneur pneumatique à double action présente une première chambre de travail pneumatique et une deuxième chambre de travail pneumatique, lesquelles sont séparées pneumatiquement et présentent des directions d'action contraires, et l'appareil de champ présente un autre ensemble de soupapes pneumatiques (1), en particulier conçu de manière identique, dans lequel la première chambre de travail est reliée au canal d'air de commande du premier ensemble de soupapes pneumatiques (1) et la deuxième chambre de travail pneumatique est reliée au canal d'air de commande pneumatique de l'autre ensemble de soupapes pneumatiques (1).

15. Appareil de champ selon la revendication 13 ou 14, comportant en outre une source d'air comprimé, telle qu'un réservoir d'air comprimé, un compresseur, une conduite d'alimentation, lequel/laquelle est relié(e) de façon pneumatique au canal d'alimentation en air.
